(19) **Europäisches Patentamt European Patent Office Office européen des brevets**

(11) **EP 2 794 102 B1**

(12) **FASCICULE DE BREVET EUROPEEN**

(45) Date de publication et mention de la délivrance du brevet:
**25.03.2020 Bulletin 2020/13**

(21) Numéro de dépôt: **12813401.2**

(22) Date de dépôt: **23.11.2012**

(51) Int Cl.:
**B01J 29/76** *(2006.01)*    **B01J 37/02** *(2006.01)*
**C10G 47/20** *(2006.01)*

(86) Numéro de dépôt international:
**PCT/FR2012/000482**

(87) Numéro de publication internationale:
**WO 2013/093226 (27.06.2013 Gazette 2013/26)**

(54) **PROCEDE DE PREPARATION D'UN CATALYSEUR UTILISABLE EN HYDROCONVERSION COMPRENANT AU MOINS UNE ZÉOLITHE NU-86**

VERFAHREN ZUR HERSTELLUNG EINES ZUR HYDROKONVERSION MIT MINDESTENS EINEM NU-86-ZEOLITH GEEIGNETEN KATALYSATORS

METHOD FOR PREPARING A CATALYST USABLE IN HYDROCONVERSION AND INCLUDING AT LEAST ONE NU-86 ZEOLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2011 FR 1104023**

(43) Date de publication de la demande:
**29.10.2014 Bulletin 2014/44**

(73) Titulaire: **IFP Energies nouvelles 92500 Rueil-Malmaison (FR)**

(72) Inventeurs:
• **BONDUELLE Audrey 69340 FRANCHEVILLE (FR)**
• **GUILLON Emmanuelle 69390 VOURLES (FR)**
• **ROY-AUBERGER Magalie 38300 NIVOLAS-VERMELLE (FR)**

(74) Mandataire: **IFP Energies nouvelles Département Propriété Industrielle Rond Point de l'échangeur de Solaize BP3 69360 Solaize (FR)**

(56) Documents cités:
**FR-A1- 2 775 202    FR-A1- 2 779 072**

Remarques:
Le dossier contient des informations techniques présentées postérieurement au dépôt de la demande et ne figurant pas dans le présent fascicule.

EP 2 794 102 B1

**Description**

L'invention concerne un procédé de préparation d'un catalyseur comprenant au moins un métal choisi dans le groupe formé par les métaux du groupes VIII et les métaux du groupe VIB, pris seuls ou en mélange, et un support comprenant de 0,2 à 30 % poids de zéolithe NU-86 et de 70 à 99,8% poids d'une matrice minérale poreuse, les pourcentages poids étant exprimés par rapport à la masse totale dudit support. La présente invention concerne également un procédé d'hydrocraquage utilisant le catalyseur préparé selon le procédé de préparation spécifique selon l'invention.

## ART ANTERIEUR

L'hydrocraquage de coupes pétrolières lourdes est un procédé très important du raffinage qui permet de produire, à partir de charges lourdes excédentaires et peu valorisables, des fractions plus légères telles que les essences, carburéacteurs et carburant diesel que recherche le raffineur pour adapter sa production à la structure de la demande. C'est un procédé largement décrit dans la littérature.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports acides dont les surfaces varient généralement de 150 à 800 $m^2/g^{-1}$ telles que les alumines halogénées (chlorées ou fluorées notamment), les combinaisons d'oxydes de bore et d'aluminium, et plus souvent les silice-alumine amorphes et les zéolithes en combinaison avec un liant généralement aluminique. La fonction hydrogénante est apportée soit par un ou plusieurs métaux du groupe VIB de la classification périodique des éléments, soit par une association d'au moins un métal du groupe VIB de la classification périodique et au moins un métal du groupe VIII déposés sur le support.

La bifonctionnalité du catalyseur, c'est-à-dire le rapport, la force et la distance entre les fonctions acides et hydrogénantes est un paramètre clé connu de l'homme de l'art pour influencer l'activité et la sélectivité du catalyseur. Une fonction acide faible et une fonction hydrogénante forte donnent des catalyseurs peu actifs, travaillant à température en général élevée (supérieure ou égale à 390-400°C), et à vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens (carburéacteurs et gazoles). Inversement, une fonction acide forte et une fonction hydrogénante faible donnent des catalyseurs actifs, mais présentant de moins bonnes sélectivités en distillats moyens.

Les catalyseurs comportant des zéolithes présentent une bonne activité catalytique, mais présentent des sélectivités en distillats moyens (carburéacteurs et gazoles) souvent insuffisantes.

L'art antérieur fait état de nombreux travaux afin d'améliorer la sélectivité en distillats moyens des catalyseurs zéolithiques. Ces derniers sont composés d'une phase hydrogénante de composition très variable (différents métaux), généralement déposé sur un support contenant une zéolithe, le plus souvent la zéolithe Y. La phase hydrogénante est active sous forme sulfure.

La demande de brevet FR 2 775 293 décrit également l'utilisation d'un catalyseur comprenant au moins une matrice et au moins une zéolithe NU-86 ou NU-87 et au moins une phase active dans un procédé d'hydrocraquage de charges hydrocarbonées. La préparation desdits catalyseurs se termine, dans tous les cas, par une étape de calcination à une température comprise entre 250 et 600°C.

Le document FR 2 775 202 A1 décrit la préparation d'un catalyseur utilisé dans un procédé d'hydrocraquage dans lequel : a) on sèche un solide renfermant au moins une matrice, au moins une zéolithe telle que NU-86 et au moins un élément du groupe VIB et du groupe VIII, b) on imprègne le solide, c) on laisse reposer le solide, d) on sèche le solide, e) on calcine le solide obtenu à l'étape d).

Le document FR 2 779 072 décrit la préparation d'un catalyseur utilisé dans un procédé d'hydrocraquage dans lequel a) on sèche un solide renfermant au moins une matrice, au moins une zéolithe telle que NU-86 et au moins un élément du groupe VIB et du groupe VIII, b) le solide sec est calciné, c) on imprègne le solide par une solution contenant au moins un élément du groupe VB, d) on laisse reposer le solide, e) on sèche le solide.

Un objectif de la présente demande est de proposer un préparation de préparation d'un catalyseur permettant d'améliorer l'activité catalytique dudit catalyseur utilisé dans un procédé d'hydroconverison de charges hydrocarbonées, tout en conservant ou en améliorant la sélectivité en distillats moyens des catalyseurs zéolithiques.

## RESUME DE L'INVENTION

La présente invention concerne un procédé de préparation d'un catalyseur comprenant au moins les étapes successives suivantes :

a) on prépare un support comprenant de 0,2 à 30 % poids de zéolithe NU-86 et de 70 à 99,8% poids d'une matrice minérale poreuse, les pourcentage poids étant exprimés par rapport à la masse totale dudit support,

b) on imprègne en une étape le support préparé selon l'étape a) par au moins une solution contenant au moins un précurseur d'au moins un métal choisi dans le groupe formé par les métaux du groupe VIII et les métaux du groupe VIB, pris seuls ou en mélange,

c) on procède à une étape de maturation, dans laquelle on laisse reposer le support imprégné issu de l'étape b) pendant une durée comprise entre 15 minutes et 48 heures

d) au moins une étape de séchage réalisée à une température inférieure 150°C, sans étape de calcination ultérieure, du support imprégné et maturé obtenu à l'issue de l'étape c).

La présente invention concerne également un procédé d'hydrocraquage de charges hydrocarbonées utilisant le catalyseur préparé selon ledit procédé de préparation selon l'invention, opérant, en présence d'hydrogène, à une température supérieure à 200°C, sous une pression supérieure à 1 MPa, à une vitesse spatiale comprise entre 0,1 et 20 h-1 et à une quantité d'hydrogène introduite est telle que le rapport volumique litre d'hydrogène/litre d'hydrocarbure soit compris entre 80 et 5000 L/L.

## DESCRIPTION DETAILLEE DE L'INVENTION

Étape a) :

Conformément à l'étape a) du procédé de préparation selon l'invention, un support comprenant de 0,2 à 30 % poids de zéolithe NU-86 et de 70 à 99,8% poids d'une matrice minérale poreuse, les pourcentages poids étant exprimés par rapport à la masse totale dudit support, est préparé.
Ledit support préparé selon l'étape a) du procédé de préparation selon l'invention comprend de préférence, de 0,5 à 25 % poids et de manière préférée, de 1 à 20 % poids de zéolithe NU-86 et de 75 à 99.5 % poids et de manière préférée, de 80 à 99 % poids d'une matrice minérale poreuse, les pourcentage poids étant exprimés par rapport à la masse totale dudit support.
La zéolithe NU-86 sous forme hydrogène, désignée par H-NU-86 et obtenue par calcination et/ou échanges ioniques de la zéolithe NU-86 brute de synthèse ainsi que son mode de préparation est décrite dans le brevet EP-0463768 A2. Ladite zéolithe NU-86 est caractérisée par des données structurales de diffraction des rayons X défini par Casci et al. dans la demande de brevet EP463.768.
La zéolithe NU-86 est généralement synthétisée en présence de cations sodium et d'un structurant organique qui est soit l'octamethonium dibromure soit le nonaméthonium di bromure.
La zéolithe NU-86 contient du silicium et au moins un élément T choisi dans le groupe formé par l'aluminium, le fer, le gallium, le bore, le germanium, de préférence T est l'aluminium.
La zéolithe NU-86 n'a pas de type structural défini, selon les règles de l'IZA (International Zeolite Association).
Le type structural de cette zéolithe n'a pas encore été officiellement attribué par la commission de synthèse de l'IZA (International Zeolite Association). Cependant, suite aux travaux publiés au 9ieme Congrès International sur les Zéolithes par J.L. Casci, P.A. Box et M.D. Shannon ("Proceedings of the 9th International Zeolite Conférence, Montreal 1992, Eds R. Von Ballmoos et al., 1993 by Butterworth) il apparaît que, d'après ses propriétés :

-    la zéolithe NU-86 possède un système microporeux tridimensionnel;

-    ce système microporeux tridimensionnel est constitué de canaux droits dont l'ouverture de pore est délimitée par 11 atomes T (atomes tétraédriques : Si, Al, Ga, Fe..), de canaux droits délimités alternativement par des ouvertures à 10 et 12 atomes T et des canaux sinusoïdaux aussi délimités de façon alternative par des ouvertures à 10 et 12 atomes T.

On entend par le terme ouverture de pores à 10, 11 ou 12 atomes tétraédriques (T) des pores constitués de 10, 11 ou 12 atomes d'oxygènes.
La zéolithe NU-86 comprise dans le catalyseur selon l'invention, est au moins en partie, de préférence pratiquement totalement, sous forme acide, c'est-à-dire sous forme hydrogène (H$^+$), la teneur en sodium étant de préférence telle que le rapport atomique Na/T est inférieur à 10%, de préférence inférieur à 5%, de manière encore plus préférée inférieur à 1%.
La zéolithe NU-86 utilisée selon l'invention possède un ratio molaire Si / T inférieur à 150, de préférence inférieur à 100, de manière préférée inférieure à 50, de manière très préférée inférieure à 35, de manière plus préférée inférieure à 20 et de manière encore plus préférée, inférieure à 15.

Le rapport Si/Al peut être obtenu à la synthèse, sans traitement de modification a posteriori. Il peut également être obtenu par les techniques de désalumination connues de l'homme de l'art telle que par exemple un vapotraitement c'est-à-dire un traitement thermique sous vapeur d'eau et/ou un traitement acide. La demande de brevet EP 0.939.673 décrit des modes de réalisation de désalumination de la zéolithe NU-86.

De préférence, la NU-86 utilisée dans l'invention ne subit pas d'étape de désalumination, avant sa mise en forme au sein du support du catalyseur selon la présente invention.

La matrice minérale poreuse entrant dans la composition du support du catalyseur préparé selon l'invention comprend avantageusement au moins de l'aluminium et/ou au moins du silicium.

De préférence, ladite matrice comprend au moins un oxyde d'aluminium ou au moins un oxyde de silicium. Ladite matrice peut avantageusement être acide ou non. Ladite matrice peut avantageusement être mésostructurée ou non.

Ladite matrice minérale poreuse peut avantageusement être choisie parmi les alumines de transition, les alumines dopées, de préférence au phosphore, au bore et/ou au fluor, la silicalite et les silices, les aluminosilicates, de préférence amorphe ou mal cristallisée, les tamis moléculaires cristallisés non zéolithiques tels que les silicoaluminophosphates, les aluminophosphates, les ferrosilicates, les silicoaluminates de titane, les borosilicates, les chromosilicates et les aluminophosphates de métaux de transition, seuls ou en mélange.

Dans le cas où ladite matrice minérale poreuse est choisie parmi les alumines de transition, la silicalite et les silices telles que par exemple les silices mésoporeuses, ladite matrice n'est pas acide. Par alumine de transition, on entend par exemple une alumine phase alpha, une alumine phase delta, une alumine phase gamma ou un mélange d'alumine de ces différentes phases.

Dans le cas où ladite matrice minérale poreuse est choisie parmi les aluminosilicates, de préférence amorphe ou mal cristallisée, les tamis moléculaires cristallisés non zéolithiques tels que les silicoaluminophosphates, les aluminophosphates, les ferrosilicates, les silicoaluminates de titane, les borosilicates, les chromosilicates et les aluminophosphates de métaux de transition, les alumines dopées, de préférence au phosphore, au bore et/ou au fluor, ladite matrice est acide. Toute silice-alumine connue ou tout aluminosilicate connu de l'homme de l'art convient pour l'invention.

La matrice minérale poreuse acide peut également avantageusement renfermer, en plus d'au moins un des composés oxydes cités ci-dessus, au moins une argile simple synthétique ou naturelle de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées.

Ladite matrice minérale poreuse contient de préférence une teneur en impuretés cationiques inférieure à 0,1% poids, de manière préférée inférieure à 0,05% poids et de manière encore plus préférée inférieure à 0,025% poids. On entend par teneur en impuretés cationiques la teneur totale en alcalins. La matrice contient de préférence une teneur en impuretés anioniques inférieure à 1% poids, de manière préférée inférieure à 0,5% poids et de manière encore plus préférée inférieure à 0,1% poids. Dans le cas où ladite matrice minérale poreuse comprend au moins du silicium, la teneur massique pondérale en $SiO_2$ dans ladite matrice minérale poreuse est avantageusement comprise entre 1% et 99% poids, de préférence entre 5% et 95% poids, de manière préférée entre 10 % et 90 % poids, de manière plus préférée entre 10 et 50 % poids et de manière encore plus préférée, entre 20 et 50% poids.

De préférence, ladite matrice minérale poreuse est choisie parmi l'alumine et la silice alumine, seule ou en mélange.

L'étape a) de préparation du support du catalyseur selon le procédé de préparation selon l'invention est avantageusement mise en œuvre par toute technique connue de l'homme du métier.

La zéolithe NU-86 utilisée selon l'invention peut avantageusement avoir subi des traitements afin de la stabiliser ou de créer de la mésoporosité. La zéolithe NU-86 est avantageusement modifiée par l'une au moins des techniques de désalumination connues de l'homme du métier, et par exemple le traitement hydrothermique ou l'attaque acide. De préférence, la zéolithe NU-86 est avantageusement modifiée par combinaison de trois types d'opérations suivantes : le traitement hydrothermique, l'échange ionique et l'attaque acide. Lesdites opérations sont connues de l'homme du métier Ladite zéolithe NU-86 peut également avantageusement subir des traitements dit de désilication. par des solutions basiques. On pourra citer plus spécifiquement sans se restreindre des traitements par NaOH ou $Na_2CO_3$ combinés ou pas avec un traitement de désalumination.

La zéolithe NU-86, éventuellement modifiée, utilisée dans le support peut être, sans que cela soit limitatif, par exemple sous forme de poudre, poudre broyée, suspension, suspension ayant subi un traitement de désagglomération. Ainsi, par exemple, la zéolithe peut avantageusement être mise en suspension acidulée ou non à une concentration ajustée à la teneur finale en zéolithe visée sur le support. Cette suspension appelée couramment une barbotine est alors avantageusement mélangée avec les précurseurs de la matrice.

La zéolithe NU-86 éventuellement modifiée, est avantageusement mélangée à un gel, à une pâte ou à une suspension d'oxyde. Le mélange est réalisé de manière à obtenir les proportions de zéolithe NU-86 et de matrice minérale poreuse dans ledit support défini ci-dessus. Le mélange ainsi obtenu est ensuite mis en forme. La mise en forme dudit support peut avantageusement être réalisée par extrusion, par pastillage, par la méthode de la coagulation en goutte ("oil-drop"), par granulation au plateau tournant ou par toute autre méthode bien connue de l'homme du métier.

Un mode de réalisation préféré de l'étape a) du procédé de préparation selon la présente invention consiste à malaxer la poudre de zéolithes NU-86 dans un gel humide pendant quelques dizaines de minutes, puis à passer la pâte ainsi obtenue à travers une filière pour former des extrudés de diamètre compris entre 0,4 et 4 mm.

Au moins un métal hydro-déshydrogénant choisi dans le groupe formé par les métaux du groupe VIB et du groupe VIII de la classification périodique, pris seuls ou en mélange peut éventuellement être introduit lors de l'étape a) de préparation du support et de préférence lors dudit mélange.

Par ailleurs, pour faciliter la mise en forme et/ou améliorer les propriétés mécaniques finales des supports, des additifs peuvent avantageusement être ajoutés lors dudit mélange. A titre d'exemple d'additifs, on peut citer notamment la cellulose, la carboxyméthyl-cellulose, la carboxy-ethyl-cellulose, du tall-oil, les gommes xanthaniques, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, etc.

Le réglage de la porosité caractéristique des supports de l'invention est opéré partiellement lors de cette étape de mise en forme des particules de supports.

Le support mis en forme est ensuite avantageusement soumis à un ou plusieurs traitements thermiques.

Ledit support mis en forme subit avantageusement une étape de séchage. Ladite étape de séchage est effectuée par toute technique connue de l'homme du métier. De préférence, le séchage est effectué sous flux d'air. Ledit séchage peut également être avantageusement effectué sous flux de tout gaz oxydant, réducteur ou inerte. Le séchage est avantageusement opéré à pression réduite. De préférence, le séchage est avantageusement effectué entre 50 et 180°C, de manière préférée entre 60 et 150°C et de manière très préférée entre 80 et 130°C.

Ledit support, éventuellement séché, subit ensuite de préférence, une étape de calcination.

Ladite étape de calcination est avantageusement réalisée en présence d'oxygène moléculaire, par exemple en effectuant un balayage d'air, à une température avantageusement supérieure à 200°C et inférieure ou égale à 1100°C. Ladite étape de calcination peut avantageusement être effectuée en lit traversé, en lit léché ou en atmosphère statique. Par exemple, le four utilisé peut être un four rotatif tournant ou être un four vertical à couches traversées radiales. De préférence, ladite étape de calcination est effectuée entre plus d'une heure à 200°C à moins d'une heure à 1100°C. La calcination peut avantageusement être opérée en présence de vapeur d'eau et / ou en présence d'une vapeur acide ou basique. Par exemple, la calcination peut être réalisée sous pression partielle d'ammoniaque. Des traitements post-calcination peuvent éventuellement être effectués, de manière à améliorer les propriétés du support.

Ledit support peut ainsi être éventuellement soumis à un traitement hydrothermal en atmosphère confinée ou sous flux de vapeur d'eau. On entend par traitement hydrothermal en atmosphère confinée un traitement par passage à l'autoclave en présence d'eau sous une température supérieure à la température ambiante.

Dans le cas où ledit traitement hydrothermal est réalisé en atmosphère confinée, ledit support comprenant la matrice minérale poreuse et la zéolithe NU-86, mis en forme peut etre traité de différentes manières. Ainsi, ledit support peut avantageusement être imprégné d'acide, préalablement à son passage dans l'autoclave, l'autoclavage étant réalisé soit en phase vapeur, soit en phase liquide, cette phase vapeur ou liquide de l'autoclave pouvant être acide ou non. Cette imprégnation, préalable à l'autoclavage, peut être acide ou non. Cette imprégnation, préalable à l'autoclavage peut être effectuée à sec ou par immersion dudit support dans une solution aqueuse acide. De préférence, l'imprégnation est réalisée à sec.

L'autoclave est de préférence un autoclave à panier rotatif tel que celui défini dans la demande brevet EP-A-0 387 109.

La température pendant l'autoclavage est avantageusement comprise entre 100 et 250°C pendant une période de temps comprise entre 30 minutes et 3 heures.

Étape b) :

Conformément à l'étape b) du procédé de préparation selon l'invention, on imprègne en une étape le support préparé selon l'étape a) par au moins une solution contenant au moins un précurseur d'au moins un métal choisi dans le groupe formé par les métaux du groupes VIII et les métaux du groupe VIB, pris seul ou en mélange, est réalisée.

Ladite étape b) peut éventuellement être opérée sous pression réduite.

Les solutions utilisées dans les différentes étapes d'imprégnation ou d'imprégnation successives peuvent éventuellement contenir au moins un précurseur d'un élément dopant choisi parmi le bore, le phosphore et le silicium, et/ou au moins un composé organique.

Les précurseurs d'un élément dopant choisi parmi le bore, le phosphore et le silicium, les composés organiques peuvent également avantageusement être ajouté dans des solutions d'imprégnation ne contenant pas les précurseurs d'au moins un métal choisi dans le groupe formé par les métaux du groupes VIII et les métaux du groupe VIB, pris seul ou en mélange.

Ledit additif organique peut avantageusement être introduit par imprégnation avant l'imprégnation des précurseurs métalliques, en co-imprégnation avec les précurseurs métalliques ou en post-imprégnation après imprégnation des précurseurs métalliques.

Les composés organiques utilisés à titre d'éléments promoteurs de la fonction hydrogénante sont de préférence choisis parmi les agents chélatants, les agents non chélatants, les agents réducteurs et les additifs connus de l'Homme du métier. Lesdits composés organiques sont avantageusement choisis parmi les mono-, di- ou polyalcools éventuellement éthérifiés, les acides carboxyliques, les sucres, les mono, di ou polysaccharides non cycliques tels que le glucose, le fructose, le maltose, le lactose ou le sucrose, les esters, les éthers, les éthers-couronnes, les cyclodextrines et les composés contenant du soufre ou de l'azote comme l'acide nitriloacétique, l'acide ethylènediaminetetraacétique, ou la diéthylenetriamine seuls ou en mélange.

Lesdits précurseurs des métaux du groupes VIII et des métaux du groupe VIB, les précurseurs des éléments dopants et les composés organiques sont avantageusement introduits dans la ou les solutions d'imprégnation dans une quantité telle que les teneurs en élément du groupe VIII, VIB, en élément dopant et en additifs organiques sur le catalyseur final soient telles que définies plus bas.

De préférence, lesdits précurseurs des métaux du groupes VIII et des métaux du groupe VIB, les précurseurs des éléments dopants et les composés organiques sont avantageusement introduits dans la ou les solutions d'imprégnation dans une quantité correspondant :

- à un rapport molaire d'élément du groupe VIII sur élément du groupe VIB compris entre 0,1 et 0,8, et de préférence entre 0,15 et 0,5,

- à un rapport molaire élément dopant sur élément du groupe VIB compris entre 0 et 1, et de préférence entre 0,08 et 0,5,

- à un rapport molaire composé organique sur élément du groupe VIB compris entre 0 et 5, et de préférence entre 0,2 et 3.

De préférence, ladite ou lesdites étape(s) d'imprégnation sont effectuées par la méthode d'imprégnation dite "à sec" bien connue de l'homme du métier.

Les précurseurs d'éléments du groupe VIII qui peuvent être utilisées sont bien connues de l'homme du métier. Les précurseurs du(es) métal(ux) non noble(s) du groupe VIII est/sont avantageusement choisi(s) parmi les oxydes, les hydroxydes, les hydroxycarbonates, les carbonates et les nitrates. L'hydroxycarbonate de nickel, le nitrate de nickel, le nitrate de cobalt, le carbonate de nickel ou l'hydroxyde de nickel, le carbonate de cobalt ou l'hydroxyde de cobalt sont utilisés de manière préférée.

Les précurseurs du(es) métal(ux) noble(s) du groupe VIII est/sont avantageusement choisi(s) parmi les halogénures, par exemple les chlorures, les nitrates, les acides tels que l'acide chloroplatinique, les oxychlorures tels que l'oxychlorure ammoniacal de ruthénium.

Les précurseurs d'éléments du groupe VIB qui peuvent être utilisées sont bien connues de l'homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique ($H_3PMo_{12}O_{40}$) et leurs sels, et éventuellement l'acide silicomolybdique ($H_4SiMo_{12}O_{40}$) et les sels correspondants. Les sources de molybdène peuvent également être tout polyoxométallate de type Keggin, Keggin lacunaire, Keggin substitué, Dawson, Anderson, Strandberg, par exemple. On utilise de préférence le trioxyde de molybdène et les hétéropolyanions de type Strandberg ($P_2Mo_5O_{23}^{6-}$), Keggin ($PMo_{12}O_{40}^{3-}$), Keggin lacunaire ou Keggin substitué connus de l'Homme du métier.

Par exemple, parmi les précurseurs de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique ($H_3PW_{12}O_{40}$) et leurs sels, et éventuellement l'acide silicotungstique ($H_4SiW_{12}O_{40}$) et ses sels. Les sources de tungstène peuvent également être tout polyoxométallate de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué connus de l'Homme du métier.

Le précurseur de phosphore peut avantageusement être l'acide orthophosphorique $H_3PO_4$, les sels et esters correspondants ou les phosphates d'ammonium. Le phosphore peut également avantageusement être introduit en même temps que le(s) élément(s) du groupe VIB sous la forme d'hétéropolyanions de Keggin, Keggin lacunaire, Keggin substitué ou de type Strandberg tel que par exemple sous la forme d'acide phosphomolybdique et de ses sels, de l'acide phosphotungstique et ses sels, lors de la synthèse de ladite matrice. Le phosphore, lorsqu'il n'est pas introduit lors de la synthèse de ladite matrice mais en post-imprégnation, peut avantageusement être introduit sous la forme d'un mélange d'acide phosphorique et d'un composé organique basique contenant de l'azote tels que l'ammoniaque, les amines primaires et secondaires, les amines cycliques, les composés de la famille de la pyridine et des quinoléines et les composés de la famille du pyrrole.

De nombreux précurseurs de silicium peuvent être employées. Ainsi, on peut utiliser l'orthosilicate d'éthyle $Si(OEt)_4$, les siloxanes, les polysiloxanes, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

Le précurseurs de bore peut avantageusement être l'acide borique, de préférence l'acide orthoborique $H_3BO_3$, le biborate ou le pentaborate d'ammonium, l'oxyde de bore, les esters boriques. Le bore peut également être introduit en même temps que le(s) élément(s) du groupe VIB sous la forme d'hétéropolyanions de Keggin, Keggin lacunaire, Keggin substitué tel que par exemple sous la forme de l'acide boromolybdique et de ses sels, ou de l'acide borotungstique et de ses sels lors de la synthèse de ladite matrice. Le bore, lorsqu'il n'est pas introduit lors de la synthèse de ladite matrice mais en post-imprégnation, peut avantageusement être introduit par exemple par une solution d'acide borique dans un mélange eau/alcool ou encore dans un mélange eau/ethanolamine. Le bore peut également avantageusement être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole.

Étape c) :

a) Conformément à l'étape c) du procédé de préparation selon l'invention, on procède à une étape de maturation, dans laquelle on laisse reposer le support imprégné issu de l'étape b) pendant une durée comprise entre 15 minutes et 48 heures

Étape d) :

Conformément à l'étape d) du procédé de préparation selon l'invention, au moins une étape de séchage à une température inférieure 150°C est réalisée, sans étape de calcination ultérieure, du support imprégné et maturé obtenu à l'issue de l'étape c).De préférence, ladite étape de séchage est réalisée à une température inférieure à 140°C, de manière préférée, inférieure à 145°C de manière très préférée inférieure à 130°C, de manière plus préférée comprise entre 100 et 145°C, et de manière encore plus préférée, comprise entre 100 et 130 °C, sans étape de calcination ultérieure.

Dans le cas où l'étape b) d'imprégnation du procédé de préparation selon l'invention est réalisée par imprégnations successives, au moins une étape d) de séchage est avantageusement mise en œuvre entre lesdites étapes d'imprégnations.

Le séchage permet d'évacuer le solvant d'imprégnation sans modifier de manière significative les précurseurs oxydes déposés sur le support. Un séchage efficace permettant d'évacuer la plus grosse partie du solvant est généralement réalisé à une température comprise entre 100 et 150°C et de préférence entre 100 et 130°C. La température de séchage ne doit pas dépasser 150°C car au delà, les précurseurs oxydes déposés sur le support sont dénaturés.

A l'issue de l'étape d), on obtient un catalyseur séché qui n'est soumis à aucune étape de calcination ultérieure.

On entend par étape de calcination, une étape de traitement thermique générant la dégradation partielle ou totale des molécules organiques éventuellement présentes sur le support et dans laquelle les précurseurs oxydes déposés sur le support sont partiellement ou totalement dénaturés. Une étape de calcination est généralement réalisée à une température supérieure à 150°C et de préférence comprise entre 250 et 600°C.

Les catalyseurs obtenus à l'issue du procédé selon la présente invention sont ensuite avantageusement mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 $m^2$/g, un volume poreux mesuré par porosimétrie au mercure compris entre 0,2 et 1,5 $cm^3$/g et une distribution en taille de pores pouvant être monomodale, bimodale ou polymodale.

De préférence, les catalyseurs obtenus à l'issue du procédé selon la présente invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme trilobée est utilisée de manière préférée, mais toute autre forme peut être utilisée.

Les catalyseurs ainsi obtenus, sous forme oxyde, peuvent éventuellement être amenés au moins en partie sous forme métallique ou sulfure.

De préférence, avant son utilisation, lesdits catalyseurs obtenus à l'issue du procédé selon la présente invention est transformé en un catalyseur sulfuré afin de former son espèce active.

Une étape e) de sulfuration est avantageusement mise en œuvre après ladite étape d) de séchage, sur ledit catalyseur séché obtenu à l'issue de l'étape d) du procédé selon l'invention, sans étape de calcination intermédiaire.

Ledit catalyseur séché est avantageusement sulfuré de manière *ex situ* ou *in situ.* Les agents sulfurants sont le gaz H$_2$S ou tout autre composé contenant du soufre utilisé pour l'activation des charges hydrocarbures en vue de sulfurer le catalyseur. Lesdits composés contenant du soufre sont avantageusement choisis parmi les alkyldisulfures tels que par exemple le disulfure de diméthyle (DMDS), les alkylsulfures, tel que par exemple le sulfure de diméthyle, le n-butylmercaptan, les composés polysulfures de type tertiononylpolysulfure tels que par exemple le TPS-37 ou le TPS-54 commercialisés par la société ARKEMA, ou tout autre composé connus de l'homme du métier permettant d'obtenir une bonne sulfuration du catalyseur. De manière préféré le catalyseur est sulfuré *in situ* en présence d'un agent sulfurant et d'une charge hydrocarbonée. De manière très préférée le catalyseur est sulfuré *in situ* en présence d'une charge hydrocarbonée additivée de disulfure de diméthyle.

Une méthode de sulfuration classique bien connue de l'Homme du métier consiste à chauffer le catalyseur en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

La présente invention concerne également le catalyseur susceptible d'être obtenu par le procédé de préparation selon l'invention.

Le catalyseur obtenu par le procédé de préparation selon l'invention comprend au moins un métal hydro-déshydrogénant choisi dans le groupe formé par les métaux du groupe VIB et du groupe VIII de la classification périodique, pris seul ou en mélange et un support comprenant de 0,2 à 30 % poids, de préférence, de 0,5 à 25 % poids et de manière préférée, de 1 à 20 % poids de zéolithe NU-86 et de 70 à 99,8% poids, de préférence de 75 à 99,5 % poids et de manière préférée, de 80 à 99 % poids d'une matrice minérale poreuse, les pourcentage poids étant exprimés par rapport à la masse totale dudit support.

Les métaux du groupe VIB et du groupe VIII peuvent être présents au moins en partie sous la forme choisie parmi la forme métallique et/ou oxyde et/ou sulfure.

Les métaux du groupe VIII sont avantageusement choisis parmi les métaux nobles ou non nobles, de préférence parmi le fer, le cobalt, le nickel, le ruthénium, le rhodium, le palladium, l'osmium, l'iridium et le platine seul ou en mélange et de manière préférée, lesdits métaux du groupe VIII sont choisis parmi le nickel, le cobalt et le fer, le platine et le palladium pris seul ou en mélange.

Les métaux du groupe VIII non nobles sont de préférence choisis parmi le nickel, le cobalt et le fer, pris seul ou en mélange.

Les métaux du groupe VIII nobles sont de préférence choisis parmi le platine et le palladium pris seul ou en mélange.

Les métaux du groupe VIB sont de préférence choisis parmi le tungstène et le molybdène pris seul ou en mélange.

D'une manière avantageuse, on utilise les associations de métaux suivantes : nickel-molybdène, cobalt-molybdène, nickel-tungstène, cobalt-tungstène, les associations préférées sont : nickel-molybdène, cobalt-molybdène, cobalt-tungstène, nickel-tungstène et encore plus avantageusement nickel-moybdène et nickel-tungstène.

De préférence, ledit catalyseur comprend au moins un métal hydro-déshydrogénant du groupe VIB en combinaison avec au moins un métal non noble du groupe VIII.

Dans le cas où le catalyseur comprend au moins un métal du groupe VIB en combinaison avec au moins un métal non noble du groupe VIII, la teneur en métal du groupe VIB est avantageusement comprise, en équivalent oxyde, entre 5 et 40 % en poids par rapport à la masse totale sèche dudit catalyseur, de manière préférée entre 10 et 35 % en poids et de manière très préférée entre 15 et 30 % en poids et la teneur en métal non noble du groupe VIII est avantageusement comprise, en équivalent oxyde, entre 0,5 et 10 % en poids par rapport à la masse totale sèche dudit catalyseur, de manière préférée entre 1 et 8 % en poids et de manière très préférée entre 1,5 et 6 % en poids.

Dans le cas où le catalyseur comprend au moins un métal du groupe VIII noble, la teneur en métal noble du groupe VIII est avantageusement comprise, en équivalent oxyde, entre 0,05 et 5 % en poids par rapport à la masse totale sèche dudit catalyseur, de manière préférée entre 0,1 et 2 % en poids et de manière très préférée entre 0,1 et 1 % en poids.

Le catalyseur selon la présente invention peut également éventuellement comprendre des promoteurs de la phase active, de préférence choisis parmi les éléments dopants et les composés organiques. Lesdites entités peuvent avantageusement être ajoutées à différentes étapes de la préparation du catalyseur selon l'invention.

**EP 2 794 102 B1**

Le catalyseur selon la présente invention peut également éventuellement comprendre au moins un élément dopant choisi parmi le bore, le silicium et le phosphore seul ou en mélange. On entend par élément dopant, un élément ajouté, qui en lui-même ne présente aucun caractère catalytique mais qui accroît l'activité catalytique du catalyseur.

Ledit catalyseur comprend éventuellement une teneur en élément dopant comprise entre 0 à 10 %, de préférence entre 0,5 à 8 % et de manière plus préférée entre 0,5 à 6 % poids en oxyde par rapport à la masse totale sèche dudit catalyseur. La teneur en silicium, élément dopant, n'est pas prise en compte dans la teneur totale en silicium dans la zéolithe ou dans la matrice.

Le bore, le silicium et/ou le phosphore peuvent être dans la matrice minérale poreuse, ou dans la zéolithe NU-86 ou sont de préférence déposés sur le catalyseur et alors principalement localisés sur ladite matrice minérale poreuse.

Le catalyseur selon la présente invention peut également éventuellement comprendre au moins un additif organique. On entend par additif organique, une molécule organique, qui en elle-même ne présente aucun caractère catalytique mais qui accroît l'activité catalytique du catalyseur.

Les composés organiques utilisés à titre d'éléments promoteurs de la fonction hydrogénante sont de préférence choisis parmi les agents chélatants, les agents non chélatants, les agents réducteurs et les additifs connus de l'Homme du métier. Lesdits composés organiques sont avantageusement choisis parmi les mono-, di- ou polyalcools éventuellement éthérifiés, les acides carboxyliques, les sucres, les mono, di ou polysaccharides non cycliques tels que le glucose, le fructose, le maltose, le lactose ou le sucrose, les esters, les éthers, les éthers-couronnes, les cyclodextrines et les composés contenant du soufre ou de l'azote comme l'acide nitriloacétique, l'acide ethylènediaminetetraacétique, ou la diéthylenetriamine, seuls ou en mélange.

Ledit catalyseur comprend éventuellement une teneur en additif organique comprise entre 0 à 30 %, de préférence entre 5 à 30 % et de manière plus préférée entre 10 à 30 % poids par rapport à la masse totale dudit catalyseur.

Procédé d'hydroconversion

La présente invention concerne également un procédé d'hydroconversion, de préférence d'hydrocraquage, de charges hydrocarbonées utilisant un catalyseur préparée selon ledit procédé de préparation selon l'invention et ledit procédé d'hydroconversion opérant, en présence d'hydrogène, à une température supérieure à 200°C, sous une pression supérieure à 1 MPa, à une vitesse spatiale comprise entre 0,1 et 20 h-1 et à une quantité d'hydrogène introduite est telle que le rapport volumique litre d'hydrogène/litre d'hydrocarbure soit compris entre 80 et 5000 L/L.

De préférence, le procédé d'hydroconversion selon l'invention opère à une température comprise entre 250 et 480°C, de manière préférée entre 320 et 450°C, de manière très préférée entre 330 et 435°C, sous une pression comprise entre 2 et 25 MPa, de manière préférée entre 3 et 20 MPa, à une vitesse spatiale comprise entre 0,1 et 6 h-1, de manière préférée entre 0,2 et 3 h-1, et à une quantité d'hydrogène introduite telle que le rapport volumique litre d'hydrogène/litre d'hydrocarbure est compris entre 100 et 2000 L/L.

Ces conditions opératoires utilisées dans le procédé selon l'invention permettent généralement d'atteindre des conversions par passe, en produits ayant des points d'ébullition inférieurs à 340°C, et mieux inférieurs à 370°C, supérieures à 15%poids et de manière encore plus préférée comprises entre 20 et 95%poids.

Des charges très variées peuvent être traitées dans le procédé selon l'invention. Elles contiennent avantageusement au moins 20% volume et de préférence au moins 80% volume de composés bouillant au-dessus de 340°C.

La charge hydrocarbonée utilisée dans le procédé selon la présente invention est avantageusement choisie parmi les LCO (Light Cycle Oil = gazoles légers issus d'une unité de craquage catalytique), les distillats atmosphériques, les distillats sous vide tels que par exemple gasoils issus de la distillation directe du brut ou d'unités de conversion telles que le FCC, le coker ou la viscoréduction, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les paraffines issues du procédé Fischer-Tropsch, les huiles désasphaltées, et les charges issues des procédés d'hydrotraitement et d'hydroconversion de la biomasse prises seules ou en mélange . La liste ci-dessus n'est pas limitative. Lesdites charges ont de préférence un point d'ébullition T5 supérieur à 340°C, de préférence supérieur à 370°C, c'est à dire que 95% des composés présents dans la charge ont un point d'ébullition supérieur à 340°C, et de manière préférée supérieur à 370°C.

La teneur en azote des charges traitées dans les procédés selon l'invention est avantageusement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges traitées dans les procédés selon l'invention est avantageusement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés selon l'invention est de préférence inférieure à 1 ppm poids.

La charge peut éventuellement contenir des asphaltènes. La teneur en asphaltènes est généralement inférieure à 3000 ppm poids, de manière préférée inférieure à 1000 ppm poids, de manière encore plus préférée inférieure à 200 ppm poids.

Ladite charge hydrocarbonée peut éventuellement avantageusement contenir des métaux, en particulier du nickel et du vanadium. La teneur cumulée en nickel et vanadium de ladite charge hydrocarbonée, traitée selon le procédé d'hydrocraquage selon l'invention, est de préférence inférieure à 1 ppm poids. La teneur en asphaltènes de ladite charge hydrocarbonée est généralement inférieure à 3000 ppm, de manière préférée inférieure à 1000 ppm, de manière encore plus préférée inférieure à 200 ppm.

Préalablement à l'injection de la charge et dans le cas où lesdits catalyseur comprennent des métaux non nobles, les catalyseurs utilisés dans le procédé selon la présente invention sont soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Lits de garde

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement. Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre mode de réalisation préféré, avoir des formes géométriques plus particulières afin d'augmenter leur fraction de vide. La fraction de vide de ces catalyseurs est comprise entre 0,2 et 0,75. Leur diamètre extérieur peut varier entre 1 et 35 mm. Parmi les formes particulières possibles sans que cette liste soit limitative, nous citons : les cylindres creux, les anneaux creux, les anneaux de Raschig, les cylindres creux dentelés, les cylindres creux crénelés, les roues de charrettes pentaring, les cylindres à multiples trous, etc..

Ces catalyseurs ou lits de garde peuvent avoir été imprégnés par une phase active ou non. De manière préférée, les catalyseurs sont imprégnés par une phase hydro-déshydrogénante. De manière très préférée, la phase CoMo ou NiMo est utilisée.

Ces catalyseurs ou lits de garde peuvent présenter de la macroporosité. Les lits de garde peuvent être commercialisés par Norton-Saint-Gobain, par exemple les lits de garde MacroTrap®. Les lits de garde peuvent être commercialisés par Axens dans la famille ACT : ACT077, ACT645, ACT961 ou HMC841, HMC845, HMC868 ou HMC945. Il peut être particulièrement avantageux de superposer ces catalyseurs dans au moins deux lits différents de hauteurs variables. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Modes de réalisation

Le procédé d'hydroconversion, de préférence d'hydrocraquage selon l'invention mettant en œuvre le catalyseur préparé selon le procédé de préparation, couvre les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Le procédé d'hydrocraquage selon l'invention est effectué en présence d'au moins un catalyseur d'hydrocraquage selon l'invention. Le procédé d'hydrocraquage selon l'invention peut avantageusement être réalisée en une ou deux étape(s), indépendamment de la pression à laquelle ledit procédé est mis en œuvre. Il est effectué en présence d'un ou plusieurs catalyseur(s) d'hydrocraquage obtenu(s) selon l'invention, dans une ou plusieurs unité(s) réactionnelle(s) équipée(s) de un ou plusieurs réacteur(s).

Le procédé d'hydrocraquage selon l'invention peut avantageusement mettre en œuvre ledit catalyseur décrit ci dessus seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydrotraitement classique situé en amont du catalyseur préparé selon le procédé de préparation selon l'invention et utilisé dans le procédé d'hydroconversion selon l'invention.

Le procédé d'hydrocraquage selon l'invention peut avantageusement également mettre en œuvre ledit catalyseur décrit ci dessus seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydrotraitement classique situé dans un réacteur en lit fixe ou en lit bouillonnant en amont du catalyseur utilisé dans le procédé selon la présente invention.

Le lit bouillonnant s'opère avec retrait de catalyseur usé et ajout journalier de catalyseur neuf afin de conserver une activité du catalyseur stable.

Le catalyseur préparé selon le procédé de préparation selon l'invention peut également avantageusement être utilisé dans la première zone réactionnelle d'hydrotraitement, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s), en lit fixe ou en lit bouillonnant.

### Procédé dit en une étape

Le procédé d'hydrocraquage selon l'invention peut avantageusement être mis en œuvre dans un procédé dit en une étape.

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif décrit ci-dessus. Cependant, il est à noter qu'aucune séparation n'intervient entre les deux types de catalyseurs. La totalité de l'effluent en sortie de réacteur est injectée sur ledit catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Le catalyseur préparé selon le procédé de préparation selon l'invention est donc avantageusement mis en œuvre dans un procédé d'hydrocraquage dit en une étape, dans une zone d'hydrocraquage placée en aval d'une zone d'hydroraffinage, aucune séparation intermédiaire n'étant mise en œuvre entre les deux zones.

De préférence, le catalyseur d'hydroraffinage utilisé dans la première zone réactionnelle d'hydroraffinage, seul ou en association avec un autre catalyseur d'hydroraffinage classique, situé en amont du catalyseur préparé selon le procédé de préparation selon l'invention, est un catalyseur comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine et de manière encore plus préférée ledit catalyseur comprend du nickel et du tungstène.

Le catalyseur préparé selon le procédé de préparation selon l'invention peut également avantageusement être utilisé dans la première zone réactionnelle d'hydroraffinage, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s).

### Procédé dit en une étape en lit fixe avec séparation intermédiaire

Le procédé d'hydrocraquage selon l'invention peut avantageusement être mis en œuvre dans un procédé dit en une étape en lit fixe avec séparation intermédiaire.

Ledit procédé comporte avantageusement une zone d'hydroraffinage, une zone permettant l'élimination partielle de l'ammoniaque, par exemple par un flash chaud, et une zone comportant ledit catalyseur d'hydrocraquage selon l'invention. Ce procédé d'hydrocraquage de charges hydrocarbonées en une étape pour la production de distillats moyens et éventuellement de bases huiles comporte avantageusement au moins une première zone réactionnelle d'hydroraffinage, et au moins une deuxième zone réactionnelle, dans laquelle est opéré l'hydrocraquage d'au moins une partie de l'effluent de la première zone réactionnelle. Ce procédé comporte également avantageusement une séparation incomplète de l'ammoniaque de l'effluent sortant de la première zone. Cette séparation est avantageusement effectuée au moyen d'un flash chaud intermédiaire. L'hydrocraquage opéré en deuxième zone réactionnelle est avantageusement réalisé en présence d'ammoniaque en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote.

Le catalyseur décrit selon l'invention est donc avantageusement mis en œuvre dans un procédé d'hydrocraquage dit en une étape en lit fixe avec séparation intermédiaire, dans une zone d'hydrocraquage placée en aval d'une zone d'hydroraffinage, une séparation intermédiaire d'élimination partielle de l'ammoniaque étant mise en œuvre entre les deux zones.

De préférence, le catalyseur d'hydroraffinage utilisé dans la première zone réactionnelle d'hydroraffinage, seul ou en association avec un autre catalyseur d'hydroraffinage classique, situé en amont du catalyseur décrit selon l'invention, est un catalyseur comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine et de manière encore plus préférée ledit catalyseur comprend du nickel et du tungstène.

Le catalyseur préparé selon le procédé de préparation selon l'invention peut également avantageusement être utilisé dans la première zone réactionnelle d'hydroraffinage, en prétraitement convertissant, seul ou en association avec un autre catalyseur d'hydroraffinage classique, situé en amont du catalyseur décrit selon l'invention, dans un ou plusieurs lit(s) catalytique(s), dans un ou plusieurs réacteur(s).

Procédé dit en deux étapes

Le procédé d'hydroconversion, de préférence d'hydrocraquage selon l'invention peut avantageusement être mis en œuvre dans un procédé dit en deux étapes.

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillats moyens (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en NH3 ainsi qu'en composés azotés organiques, en général moins de 20 ppm poids voire moins de 10 ppm poids.

Les configurations de lits catalytiques en lit fixe ou en lit bouillonnant décrites dans le cas d'un procédé dit en une étape peuvent avantageusement être utilisées dans la première étape d'un schéma dit en deux étapes, que le catalyseur selon l'invention soit utilisé seul ou en association avec un catalyseur d'hydroraffinage classique.

Le catalyseur préparé selon le procédé de préparation selon l'invention est donc avantageusement mis en œuvre dans un procédé d'hydrocraquage dit en deux étapes, dans la deuxième étape d'hydrocraquage placée en aval de la première étape d'hydroraffinage, une séparation intermédiaire étant mise en œuvre entre les deux zones.

Pour les procédés dits en une étape et pour la première étape d'hydroraffinage des procédés d'hydrocraquage dits en deux étapes, les catalyseurs d'hydroraffinage classique pouvant avantageusement être utilisés sont les catalyseurs comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine et de manière encore plus préférée ledit catalyseur comprend du nickel et du tungstène.

Selon un premier mode de réalisation du procédé d'hydrocraquage selon l'invention, le(s) catalyseur(s) d'hydrocraquage positionné(s) dans le procédé d'hydrocraquage obtenu(s) est(sont) avantageusement utilisé(s) seul(s) ou en enchaînement, en un seul ou plusieurs lits catalytiques, en lit fixe ou en lit bouillonnant, dans un ou plusieurs réacteurs, dans un schéma d'hydrocraquage dit en "une étape", avec ou sans recyclage liquide de la fraction non convertie, éventuellement en association avec un catalyseur d'hydroraffinage situé en amont du ou des catalyseurs d'hydrocraquage. Le lit bouillonnant s'opère avec retrait de catalyseur usé et ajout journalier de catalyseur neuf afin de conserver une activité du catalyseur stable.

Selon un deuxième mode de réalisation du procédé d'hydrocraquage selon l'invention, le(s) catalyseur(s) d'hydrocraquage du procédé d'hydrocraquage selon l'invention est(sont) avantageusement utilisé(s), seul(s) ou en enchaînement, en un seul ou en plusieurs lits catalytiques, dans l'une et/ou l'autre étape d'un schéma d'hydrocraquage dit en "deux étapes". Le schéma "deux étapes" est un schéma pour lequel il existe une séparation intermédiaire des effluents entre les deux zones réactionnelles. Ce schéma peut s'opérer avec ou sans recyclage liquide de la fraction non convertie issue de la première zone réactionnelle ou de la seconde zone réactionnelle. La première zone réactionnelle opère en lit fixe ou en lit bouillonnant. Dans le cas particulier où le ou les catalyseurs d'hydrocraquage obtenu(s) selon l'invention seraient placés dans la première zone réactionnelle, ils seraient placés de manière préférée en association avec un catalyseur d'hydroraffinage situé en amont desdits catalyseurs.

Les exemples suivants illustrent la présente invention sans toutefois en limiter la portée.

**Exemple 1 : Préparation d'un support S1 comprenant une zéolithe NU-86 et une matrice poreuse de type alumine.**

L'une des matières premières utilisées est une zéolithe NU-86, qui est préparée selon l'exemple 2 du brevet EP 0 463768 A2 et possède un rapport Si/Al atomique global égal à 11 et un rapport atomique Na/Al égal à 0,25.

**EP 2 794 102 B1**

La zéolithe NU-86, brute de synthèse, subit tout d'abord une calcination dite sèche à 550°C sous flux d'air sec durant 9 heures. Puis le solide obtenu est soumis à quatre échanges ioniques dans une solution de $NH_4NO_3$ 10N, à environ 100°C pendant 4 heures pour chaque échange. Le solide ainsi obtenu est référencé $NH_4$-NU-86/1 et possède un rapport Si/Al = 11 et un rapport Na/Al = 0,0012. Ses autres caractéristiques physico-chimiques sont regroupées dans le tableau 1.

**Tableau 1 : Description de la zéolithe NU-86**

| Échantillon | Diffraction X Cristallinité (%) | Adsorption | |
|---|---|---|---|
| | | $S_{BET}$ ($m^2$/g) | V(P/P$_o$ = 0,19) ml $N_2$ liquide/g |
| $NH_4$-NU-86/1 | 100 | 433 | 0,159 |

Les cristallites de la zéolithe NU-86 se présentent sous forme de cristaux dont la taille varient de 0,4 μm à 2 μm.
Ensuite, 23% poids de la zéolithe NU-86 sont mélangés à 77 % poids d'une matrice composée de boehmite tabulaire ultrafine ou gel d'alumine. A ce mélange, est ajoutée une solution aqueuse contenant de l'acide nitrique à 66% poids (7% poids d'acide par gramme de gel sec).Ce mélange est malaxé pendant 15 minutes. La pâte malaxée est ensuite extrudée à travers une filière ayant des orifices trilobés de diamètre 2 mm. Les extrudés sont ensuite calcinés à 500°C durant 2 heures sous air. Ces extrudés constituent le support S1.

**Exemple 2 : Préparation d'un support S2 comprenant une zéolithe NU-86 et une matrice poreuse de type silice alumine.**

Une poudre de silice-alumine a été préparée par coprécipitation avec une composition de 30% $SiO_2$ et 70% $Al_2O_3$. Un support de catalyseur d'hydrocraquage contenant cette silice-alumine et la zéolithe Nu-86 de l'exemple 1 a été ensuite fabriqué. Pour cela on utilise 7,6 % poids de la zéolithe NU-86 de l'exemple 1 que l'on mélange à 92,4 % poids d'une matrice composée de la silice alumine préparée ci-dessus. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices trilobés de diamètre égal à 2 mm. Les extrudés sont ensuite séchés pendant une nuit à 120°C puis calcinés à 550°C pendant 2 heures sous air. Les extrudés subissent enfin un traitement sous vapeur d'eau à 750°C pendant 2h. Ces extrudés constituent le support S2.

**Exemple 3 : Préparation d'un catalyseur C1 de formulation NiMoP (non conforme à l'invention) sur le support S2.**

Les extrudés de support S2 contenant la zéolithe NU-86 et la matrice silico-aluminique sont imprégnés à sec par une solution aqueuse où ont été préalablement solubilisés, à l'aide d'une montage à reflux, $Ni(OH)_2$, $MoO_3$ et $H_3PO_4$. Ils sont séchés une nuit à 120°C sous air et ne subissent pas de calcination ultérieure. La formulation NiMoP du catalyseur **C1** est 2,2-20-4,2% poids par rapport à la masse sèche de catalyseur respectivement pour le Ni (exprimé sous forme de NiO), pour le Mo (exprimé sous forme de $MoO_3$) et pour le P (exprimé sous forme de $P_2O_5$). Les rapports sont les suivants : Ni/Mo =0,21 et P/Mo = 0,42.

**Exemple 4 : Préparation d'un catalyseur C2 de formulation NiMoP (non conforme à l'invention) sur le support S2.**

Le catalyseur **C2** correspond au catalyseur C1 calciné à 450°C.

**Exemple 5 : Préparation d'un catalyseur C3 de formulation NiMoP (non conforme à l'invention) sur le support S1.**

Les extrudés de support contenant la zéolithe NU-86 et l'alumine sont imprégnés à sec par une solution aqueuse où ont été préalablement solubilisés, à l'aide d'une montage à reflux, $Ni(OH)_2$, $MoO_3$ et $H_3PO_4$. Ils sont séchés une nuit à 120°C sous air et ne subissent pas de calcination ultérieure. La formulation NiMoP du catalyseur **C3** est 2,6-23,2-4,7 % poids par rapport à la masse sèche de catalyseur respectivement pour le Ni (exprimé sous forme de NiO), pour le Mo (exprimé sous forme de $MoO_3$) et pour le P (exprimé sous forme de $P_2O_5$). Les rapports sont les suivants : Ni/Mo = 0,22 et P/Mo = 0,41.

**Exemple 6 : Préparation d'un catalyseur C4 de formulation NiMoP (non conforme à l'invention) sur le support S1.**

Le catalyseur **C4** correspond au catalyseur C3 calciné à 450°C.

13

**Exemple 7 : Évaluation en hydrocraquage Haute Pression d'un distillat sous vide des catalyseurs C1 et C2**

Les catalyseurs C1 et C2 dont la préparation est décrite dans les exemples 3 et 4 sont utilisés pour réaliser l'hydrocraquage d'un distillat sous vide partiellement hydrotraité dont les principales caractéristiques sont fournies dans le tableau 2.

**Tableau 2 : Caractéristiques du distillat sous vide partiellement hydrotraité.**

| Densité à 15°C | 0,9051 |
|---|---|
| Soufre (% poids) | 0,24 |
| Azote (ppm poids) | 301 |

Les catalyseurs C1 et C2 ont été mis en œuvre selon le procédé de l'invention en utilisant une unité pilote comportant 1 réacteur à lit fixe traversé, les fluides circulent de haut en bas (down-flow).

Préalablement au test d'hydrocraquage, les catalyseurs sont sulfurés à 14 MPa, à 350°C au moyen d'un gasoil de distillation directe additionné de 2% poids de DMDS (diméthyl disulfure).

Après sulfuration, les tests catalytiques ont été effectués dans les conditions suivantes :

Pression totale : 14 MPa,
Débit d'hydrogène : 1000 litres d'hydrogène gazeux par litre de charge injectée,
Vitesse spatiale (WH) est égale à 0,66 h$^{-1}$,

La température appliquée est celle pour laquelle 80% de conversion brute est obtenue.

La charge est additivée de DMDS et d'aniline afin de maintenir au cours du test les pressions partielles en $H_2S$ et $NH_3$ qui auraient été générées par l'hydrotraitement préalable de la charge brute, non hydrotraitée.

Les performances catalytiques sont exprimées en termes de conversion brute de la coupe 370+ (molécules dont le point d'ébullition est supérieur à 370°C) en la coupe 370- (molécules dont le point d'ébullition est inférieur à 370°C) et de sélectivité brute en distillats moyens (coupe 150-370°C). La conversion et la sélectivité sont exprimées à partir des résultats de distillation simulée et des analyses des gaz par chromatographie gazeuse.

La conversion brute en produits ayant un point d'ébullition inférieurs à 370°C, notée CB 370°C, est prise égale au pourcentage massique de molécules dont le point d'ébullition est inférieur à 370°C dans les effluents CB 370°C = % de 370°C$^-$$_{effluents}$

La sélectivité brute en distillats moyens (coupe dont les points d'ébullition sont compris entre 150 et 370°C est notée SB DM et est prise égale à :

$$SB\ DM = [(fraction\ en\ 150 - 370\ _{effluents})] \ / \ [(\ \%\ de\ 370°C\ ^-\ _{effluents})].$$

Les performances catalytiques obtenues sont données dans le tableau 3 ci-après.

**Tableau 3 : Résultats catalytiques en hydrocraquage haute pression des catalyseurs C1 et C2.**

| Catalyseur | Traitement thermique de la phase oxyde NiMoP | Température pour maintenir CB 370°C = 80% | SB DM en % |
|---|---|---|---|
| C1 (non conforme) | Séchage à 120°C sans calcination | 393°C | 64 |
| C2 (non conforme) | Séchage à 120°C et Calcination à 450°C | 395°C | 64 |

Les résultats montrent que le séchage à 120°C de la phase oxyde précurseur de la fonction hydrogénante, permet de générer un catalyseur C1 (préparé non conformément à l'invention) plus actif et que le catalyseur C2 (non conforme à l'invention) pour lequel la phase oxyde a été calcinée à 450°C tout en maintenant la même sélectivité en distillats moyens.

**Exemple 8 : Évaluation en hydrocraquage Haute Pression d'un distillat sous vide des catalyseurs C3 et C4**

Les catalyseurs C3 et C4 dont la préparation est décrite dans les exemples 5 et 6 sont utilisés pour réaliser l'hydrocraquage d'un distillat sous vide hydrotraité dont les principales caractéristiques sont fournies dans le tableau 4.

**Tableau 4 : Caractéristiques du distillat sous vide hydrotraité.**

| Densité à 15°C | 0,8659 |
|---|---|
| Soufre (ppm poids) | 54 |
| Azote (ppm poids) | 14 |

Les catalyseurs C3 et C4 ont été mis en œuvre selon le procédé de l'invention en utilisant une unité pilote comportant 1 réacteur à lit fixe traversé, les fluides circulent de haut en bas (down-flow).

Préalablement au test d'hydrocraquage, les catalyseurs sont sulfurés à 14 MPa, à 350°C au moyen d'un gasoil de distillation directe additionné de 2% poids de DMDS (diméthyl disulfure).

Après sulfuration, les tests catalytiques ont été effectués dans les conditions suivantes :

Pression totale : 14 MPa,
Débit d'hydrogène : 1000 litres d'hydrogène gazeux par litre de charge injectée,
Vitesse spatiale (WH) est égale à 1 h$^{-1}$,
La température appliquée est celle pour laquelle 70% de conversion brute est obtenue.

La charge est additivée de DMDS et d'aniline afin de maintenir au cours du test les pressions partielles en $H_2S$ et $NH_3$ qui auraient été générées par l'hydrotraitement préalable de la charge brute, non hydrotraitée.

Les performances catalytiques sont exprimées en termes de conversion brute de la coupe 370+ (molécules dont le point d'ébullition est supérieur à 370°C) en la coupe 370- (molécules dont le point d'ébullition est inférieur à 370°C) et de rendement en distillats moyens (DM, coupe 150-370°C). La conversion et le rendement en DM sont exprimés à partir des résultats de distillation simulée et des analyses des gaz par chromatographie gazeuse.

La conversion brute en produits ayant un point d'ébullition inférieurs à 370°C, notée CB 370°C, est prise égale au pourcentage massique de molécules dont le point d'ébullition est inférieur à 370°C dans les effluents CB 370°C = % de 370°C $^-$ effluents

Le rendement en distillats moyens (coupe dont les points d'ébullition sont compris entre 150 et 370°C) est pris égal à :

Rendement en DM = % en molécules dont les points d'ébullition sont compris en 150°C et 370°C dans les effluents.

Les performances catalytiques obtenues sont données dans le tableau 5 ci-après.

**Tableau 5 : Résultats catalytiques en hydrocraquage haute pression de C3 et C4**

| Catalyseur | Composition du support | Température pour maintenir CB 370°C = 80% | Rendement en DM en % |
|---|---|---|---|
| C3 (conforme) | Séchage à 120°C sans calcination ultérieure | 365,5 | 49,8 |
| C4 (non conforme) | Séchage à 120°C et Calcination à 450°C | 367,5 | 49,7 |

Les résultats montrent que le séchage à 120°C de la phase oxyde précurseur de la fonction hydrogénante, permet de générer un catalyseur C3 (préparé non conformément au procédé de préparation de l'invention) plus actif que le catalyseur C4 (non conforme à l'invention) pour lequel la phase oxyde a été calcinée à 450°C, tout en maintenant le même rendement en distillats moyens.

**Revendications**

**1.** Procédé de préparation d'un catalyseur comprenant au moins les étapes successives suivantes :

a) on prépare un support comprenant de 0,2 à 30 % poids de zéolithe NU-86 et de 70 à 99,8% poids d'une matrice minérale poreuse, les pourcentage poids étant exprimés par rapport à la masse totale dudit support,
b) on imprègne en une étape le support préparé selon l'étape a) par au moins une solution contenant au moins un précurseur d'au moins un métal choisi dans le groupe formé par les métaux du groupe VIII et les métaux du groupe VIB, pris seuls ou en mélange,
c) on procède à une étape de maturation, dans laquelle on laisse reposer le support imprégné issu de l'étape b) pendant une durée comprise entre 15 minutes et 48 heures,
d) au moins une étape de séchage réalisée à une température inférieure 150°C, sans étape de calcination ultérieure, du support imprégné et maturé obtenu à l'issue de l'étape c).

2. Procédé de préparation selon la revendication 1 dans lequel ladite matrice minérale poreuse est choisie parmi les alumines de transition, les alumines dopées, la silicalite et les silices, les aluminosilicates, les tamis moléculaires cristallisés non zéolithiques seuls ou en mélange.

3. Procédé de préparation selon la revendication 2 dans lequel ladite matrice minérale poreuse est choisie parmi l'alumine et la silice alumine, seule ou en mélange.

4. Procédé de préparation selon l'une des revendications 1 à 3 dans lequel lesdites solutions contiennent au moins un précurseur d'un élément dopant choisi parmi le bore, le phosphore et le silicium, et/ou au moins un composé organique.

5. Procédé de préparation selon l'une des revendications 1 à 4 dans lequel lesdits précurseurs des métaux du groupes VIII et des métaux du groupe VIB, les précurseurs des éléments dopants et les composés organiques sont introduits dans la ou les solutions d'imprégnation dans une quantité correspondant :

   - à un rapport molaire d'élément du groupe VIII sur élément du groupe VIB compris entre 0,1 et 0,8,
   - à un rapport molaire élément dopant sur élément du groupe VIB compris entre 0 et 1,
   - à un rapport molaire composé organique sur élément du groupe VIB compris entre 0 et 5.

6. Procédé de préparation selon l'une des revendications 1 à 5 dans lequel ladite étape de maturation est réalisée en laissant reposer le support imprégné issu de l'étape b) sous une atmosphère humide à une température comprise entre 10 et 80°C.

7. Procédé de préparation selon l'une des revendications 1 à 6 dans lequel ladite étape de séchage est réalisée à une température inférieure à 130°C, sans étape de calcination ultérieure.

8. Procédé de préparation selon l'une des revendications 1 à 6 dans lequel une étape e) de sulfuration est mise en œuvre après l'étape d), sans étape de calcination intermédiaire.

9. Procédé d'hydroconversion de charges hydrocarbonées utilisant le catalyseur préparé selon le procédé de préparation selon l'une des revendications 1 à 8, ledit procédé d'hydrocraquage opérant, en présence d'hydrogène, à une température supérieure à 200°C, sous une pression supérieure à 1 MPa, à une vitesse spatiale comprise entre 0,1 et 20 h-1 et à une quantité d'hydrogène introduite est telle que le rapport volumique litre d'hydrogène/litre d'hydrocarbure soit compris entre 80 et 5000 L/L.

10. Procédé selon la revendication 9 dans lequel ledit procédé opère à une température comprise entre 250 et 480°C, sous une pression comprise entre 2 et 25 MPa, à une vitesse spatiale comprise entre 0,1 et 6 h-1, et à une quantité d'hydrogène introduite telle que le rapport volumique litre d'hydrogène/litre d'hydrocarbure est compris entre 100 et 2000 L/L.

11. Procédé selon l'une des revendications 9 ou 10 dans lequel ladite charge hydrocarbonée est choisie parmi les gazoles légers issus d'une unité de craquage catalytique, les distillats atmosphériques, les distillats sous vide les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de résidus atmosphériques et/ou de résidus sous vide et/ou d'huiles désasphaltées, les paraffines issues du procédé Fischer-Tropsch, les huiles désasphaltées, et les charges issues des procédés d'hydrotraitement et d'hydroconversion de la biomasse, prises seules ou en mélange.

12. Procédé selon l'une des revendications 9 à 11 dans lequel ledit procédé est mis en œuvre dans un procédé dit en une étape.

13. Procédé selon l'une des revendications 9 à 11 dans lequel ledit procédé est mis en œuvre dans un procédé dit en deux étapes.

**Patentansprüche**

1. Verfahren zur Herstellung eines Katalysators, umfassend mindestens die folgenden aufeinanderfolgenden Schritte:

a) man stellt einen Träger her, umfassend 0,2 bis 30 Gew.-% Zeolith NU-86 und 70 bis 99,8 Gew.-% einer porösen mineralischen Matrix, wobei die Gewichtsprozente bezogen auf das Gesamtgewicht des Trägers ausgedrückt sind,
b) man imprägniert in einem Schritt den gemäß Schritt a) hergestellten Träger mit mindestens einer Lösung, die mindestens eine Vorstufe mindestens eines Metalls enthält, ausgewählt aus der Gruppe, die von den Metallen der Gruppe VIII und den Metallen der Gruppe VIB allein oder im Gemisch gebildet wird,
c) man führt einen Reifungsschritt durch, in dem man den imprägnierten Träger aus Schritt b) für eine Dauer zwischen 15 Minuten und 48 Stunden ruhen lässt,
d) mindestens einen Trocknungsschritt, der bei einer Temperatur unter 150°C durchgeführt wird, ohne anschließenden Kalzinierungsschritt, des nach Schritt c) erhaltenen imprägnierten und gereiften Trägers.

2. Herstellungsverfahren nach Anspruch 1, wobei die poröse mineralische Matrix aus Übergangs-Aluminiumoxiden, dotierten Aluminiumoxiden, Silikalit und Siliziumoxiden, Alumosilikaten, kristallinen Nicht-Zeolith-Molekularsieben allein oder im Gemisch ausgewählt ist.

3. Herstellungsverfahren nach Anspruch 2, wobei die poröse mineralische Matrix aus Aluminiumoxid und Siliziumdioxid-Aluminiumoxid allein oder im Gemisch ausgewählt ist.

4. Herstellungsverfahren nach einem der Ansprüche 1 bis 3, wobei die Lösungen mindestens eine Vorstufe eines Dotierungselements, ausgewählt aus Bor, Phosphor und Silizium, und/oder mindestens eine organische Verbindung enthalten.

5. Herstellungsverfahren nach einem der Ansprüche 1 bis 4, wobei die Vorstufen der Metalle der Gruppe VIII und der Metalle der Gruppe VIB, die Vorstufen der Dotierungselemente und die organischen Verbindungen in die Imprägnierungslösung bzw. -lösungen in einer Menge eingebracht werden, die

- einem Molverhältnis von Element der Gruppe VIII zu Element der Gruppe VIB zwischen 0,1 und 0,8,
- einem Molverhältnis von Dotierungselement zu Element der Gruppe VIB zwischen 0 und 1,
- einem Molverhältnis von organischer Verbindung zu Element der Gruppe VIB zwischen 0 und 5 entspricht.

6. Herstellungsverfahren nach einem der Ansprüche 1 bis 5, wobei der Reifungsschritt durchgeführt wird, indem man den imprägnierten Träger aus Schritt b) unter einer feuchten Atmosphäre bei einer Temperatur zwischen 10 und 80°C ruhen lässt.

7. Herstellungsverfahren nach einem der Ansprüche 1 bis 6, wobei der Trocknungsschritt bei einer Temperatur unter 130°C ohne anschließenden Kalzinierungsschritt durchgeführt wird.

8. Herstellungsverfahren nach einem der Ansprüche 1 bis 6, wobei ein Sulfurierungsschritt e) nach Schritt d) ohne einen zwischengeschalteten Kalzinierungsschritt durchgeführt wird.

9. Verfahren zur Hydrokonversion von Kohlenwasserstoffbeschickungen unter Verwendung des Katalysators, der gemäß dem Herstellungsverfahren nach einem der Ansprüche 1 bis 8 hergestellt ist, wobei das Hydrocrackverfahren in Gegenwart von Wasserstoff, bei einer Temperatur über 200°C, unter einem Druck von mehr als 1 MPa, bei einer Raumgeschwindigkeit zwischen 0,1 und 20 h-1 und bei einer eingeleiteten Menge an Wasserstoff, die derart ist, dass das Volumenverhältnis von Litern Wasserstoff/Litern Kohlenwasserstoff zwischen 80 und 5000 1/1 beträgt, arbeitet.

10. Verfahren nach Anspruch 9, wobei das Verfahren bei einer Temperatur zwischen 250 und 480°C, unter einem Druck zwischen 2 und 25 MPa, bei einer Raumgeschwindigkeit zwischen 0,1 und 6 h-1 und bei einer solchen Menge an eingeleitetem Wasserstoff, dass das Volumenverhältnis von Litern Wasserstoff/Litern Kohlenwasserstoff zwischen 100 und 2000 1/1 beträgt, arbeitet.

**11.** Verfahren nach einem der Ansprüche 9 oder 10, wobei die Kohlenwasserstoffbeschickung aus leichten Gasölen, die aus einer katalytischen Crackanlage stammen, Atmosphärendruckdestillaten, Vakuumdestillaten, Beschickungen, die aus Anlagen zur Extraktion von Aromaten aus Schmierölbasen oder aus der Lösungsmittelentparaffinierung von Schmierölbasen stammen, Destillaten aus Verfahren zur Festbett- oder Wirbelbettentschwefelung oder -hydrokonversion von Atmosphärendruckrückständen und/oder Vakuumrückständen und/oder entasphaltierten Ölen, Paraffinen aus dem Fischer-Tropsch-Verfahren, entasphaltierten Ölen und Beschickungen aus Verfahren zum Hydrotreating und zur Hydrokonversion von Biomasse allein oder im Gemisch ausgewählt ist.

**12.** Verfahren nach einem der Ansprüche 9 bis 11, wobei das Verfahren in einem so genannten einstufigen Verfahren durchgeführt wird.

**13.** Verfahren nach einem der Ansprüche 9 bis 11, wobei das Verfahren in einem so genannten zweistufigen Verfahren durchgeführt wird.

**Claims**

**1.** Method of preparing a catalyst comprising at least the following successive steps:

> a) preparation of a support comprising from 0.2 to 30 wt% of zeolite NU-86 and from 70 to 99.8 wt% of a porous mineral matrix, the percentages by weight being expressed relative to the total weight of said support,
> b) single-step impregnation of the support prepared according to step a) with at least one solution containing at least one precursor of at least one metal selected from the group formed by group VIII metals and group VIB metals, used alone or as a mixture,
> c) a maturing step, in which the impregnated support from step b) is left to stand for a period of between 15 minutes and 48 hours,
> d) at least one drying step carried out at a temperature below 150°C, without a subsequent calcining step, of the impregnated and matured support obtained at the end of step c).

**2.** Method of preparation according to Claim 1 in which said porous mineral matrix is selected from transition aluminas, doped aluminas, silicalite and silicas, aluminosilicates, non-zeolitic crystalline molecular sieves, alone or as a mixture.

**3.** Method of preparation according to Claim 2 in which said porous mineral matrix is selected from alumina and silica-alumina, alone or as a mixture.

**4.** Method of preparation according to one of Claims 1 to 3 in which said solutions contain at least one precursor of a doping element selected from boron, phosphorus and silicon, and/or at least one organic compound.

**5.** Method of preparation according to one of Claims 1 to 4 in which said precursors of group VIII metals and of group VIB metals, the precursors of the doping elements and the organic compounds are introduced in the impregnating solution or solutions in an amount corresponding to:

> - a molar ratio of group VIII element to group VIB element of between 0.1 and 0.8,
> - a molar ratio of doping element to group VIB element of between 0 and 1,
> - a molar ratio of organic compound to group VIB element of between 0 and 5.

**6.** Method of preparation according to one of Claims 1 to 5 in which said maturing step is carried out by leaving the impregnated support from step b) to stand in a humid atmosphere at a temperature of between 10 and 80°C.

**7.** Method of preparation according to one of Claims 1 to 6 in which said drying step is carried out at a temperature below 130°C, without a subsequent calcining step.

**8.** Method of preparation according to one of Claims 1 to 6 in which a sulfurization step e) is applied after step d), without an intermediate calcining step.

9. Process for hydroconversion of hydrocarbon feeds using the catalyst prepared by the method of preparation according to one of Claims 1 to 8, said hydrocracking process being carried out in the presence of hydrogen at a temperature above 200°C, at a pressure above 1 MPa, at a space velocity of between 0.1 and 20 h-1 and with an amount of hydrogen introduced such that the volume ratio litre of hydrogen/litre of hydrocarbon is between 80 and 5000 L/L.

10. Process according to Claim 9 in which said process is carried out at a temperature of between 250 and 480°C, at a pressure of between 2 and 25 MPa, at a space velocity of between 0.1 and 6 h-1, and with an amount of hydrogen introduced such that the volume ratio litre of hydrogen/litre of hydrocarbon is between 100 and 2000 L/L.

11. Process according to one of Claims 9 or 10 in which said hydrocarbon feed is selected from light gas oils received from a catalytic cracking unit, atmospheric distillates, vacuum distillates, feeds from units for extraction of aromatics from lubricating oil bases or from solvent dewaxing of lubricating oil bases, distillates from processes for fixed-bed or ebullated-bed desulfurization or hydroconversion of atmospheric residues and/or of vacuum residues and/or of deasphalted oils, paraffins from the Fischer-Tropsch process, deasphalted oils, and feeds received from processes for hydrotreating and hydroconversion of biomass, used alone or as a mixture.

12. Process according to one of Claims 9 to 11 in which said process is implemented in a single-step process.

13. Process according to one of Claims 9 to 11 in which said process is implemented in a two-step process.

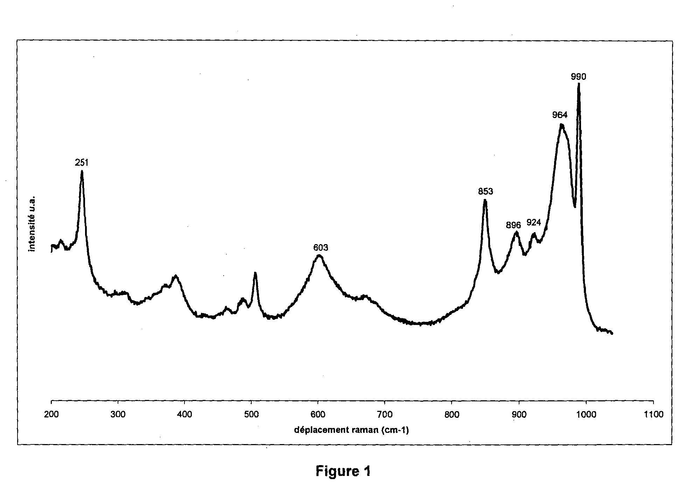

**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2775293
- FR 2775202 A1
- FR 2779072
- EP 0463768 A2
- EP 463768 A
- EP 0939673 A
- EP 0387109 A

**Littérature non-brevet citée dans la description**

- **J.L. CASCI ; P.A. BOX ; M.D. SHANNON et al.** Proceedings of the 9th International Zeolite Conférence. Butterworth, 1992
- **BRUNAUER ; EMMETT ; TELLER.** *J. Am. Chem. Soc.,* 1938, vol. 60, 309-316